(19) Europäisches Patentamt
European Patent Office
Office européen des brevets

(11) **EP 2 161 847 A1**

(12) **DEMANDE DE BREVET EUROPEEN**

(43) Date de publication:
**10.03.2010 Bulletin 2010/10**

(51) Int Cl.:
*H04B 1/707* *(2006.01)*    *H04J 13/00* *(2006.01)*

(21) Numéro de dépôt: **09178930.5**

(22) Date de dépôt: **28.07.2000**

(84) Etats contractants désignés:
**DE GB IT NL**
Etats d'extension désignés:
**AL LT LV MK RO SI**

(30) Priorité: **30.07.1999 FR 9909947**

(62) Numéro(s) de document de la (des) demande(s) initiale(s) en application de l'article 76 CBE:
**00958644.7 / 1 198 896**

(71) Demandeur: **Commissariat à l'Energie Atomique
75015 Paris (FR)**

(72) Inventeurs:
• **Daniele, Norbert
38330, Montbonnot (FR)**

• **Leveque, Sébastien
38000, Grenoble (FR)**
• **Noguet, Dominique
38100, Grenoble (FR)**
• **Lequepeys, Jean-René
38600, Fontaine (FR)**

(74) Mandataire: **Ihle, Kornelia et al
Viering, Jentschura & Partner
Grillparzerstr. 14
81675 München (DE)**

Remarques:
Cette demande a été déposée le 11-12-2009 comme demande divisionnaire de la demande mentionnée sous le code INID 62.

(54) **Procéde de transmission de données utilisant des jeux répétitifs de séquences d'étalement, émetteur et récepteur correspondants**

(57) Selon l'invention, l'étalement de spectre s'effectue sur des paquets de symboles à l'aide de jeux de séquences pseudoaléatoires réutilisés de manière répétitive. On réduit ainsi les interférences entre symboles. Application aux communications numériques par étalement de spectre.

FIG. 2

**Description**

**Domaine technique**

La présente invention a pour objet un procédé de transmission de données utilisant des jeux répétitifs de séquences d'étalement, ainsi qu'un émetteur et un récepteur correspondants.

L'invention trouve une application générale dans les communications numériques et plus particulièrement dans les réseaux locaux sans fil (WLAN), dans les boucles locales d'abonnés sans fil (WLL), en téléphonie mobile, en domotique et télécollecte, en communication dans les transports, en télévision câblée, en service multimédia sur les réseaux câblés, etc...

**Etat de la technique antérieure**

L'invention relève de la technique d'étalement de spectre. On sait que cette technique consiste en la modulation d'un symbole numérique à transmettre par une séquence pseudo-aléatoire connue de l'utilisateur. Chaque séquence est composée de N éléments appelés "chips", dont la durée est le $N^{ième}$ de la durée d'un symbole. Il en résulte un signal dont le spectre s'étale sur une plage N fois plus large que celle du signal original. A la réception, la démodulation consiste à corréler le signal reçu avec la séquence utilisée à l'émission pour retrouver le symbole de départ.

Cette technique offre de nombreux avantages mais elle ne permet pas de pallier un inconvénient lié à un effet dit d'interférence entre symboles dont l'origine est la suivante. Dans un canal radioélectrique, l'onde qui se propage de l'émetteur au récepteur peut emprunter divers trajets, de sorte que, pour un même signal émis, plusieurs signaux décalés dans le temps parviennent au récepteur, avec des amplitudes et des phases différentes. La réponse du canal au signal émis est donc étalée. Le signal émis étant généralement bref, il peut être assimilé à une impulsion, et l'on parle alors de réponse impulsionnelle. Dans les systèmes à haut débit ces différentes répliques d'un même signal peuvent interférer avec les autres signaux.

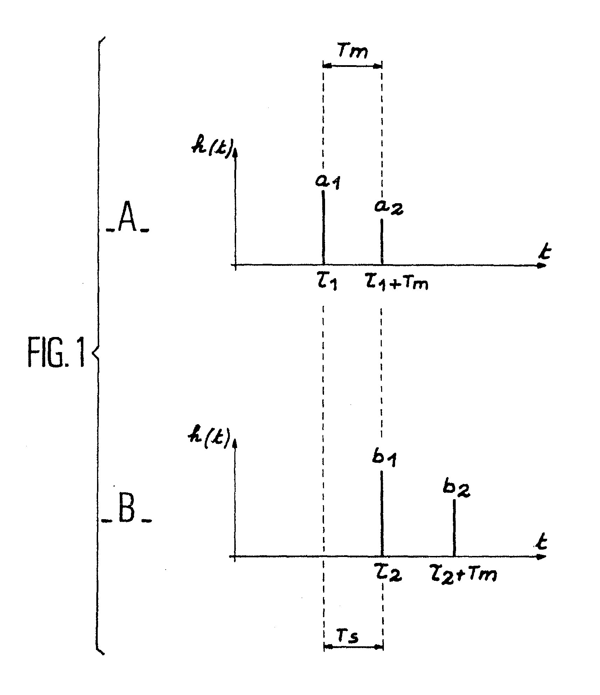

La figure 1 illustre ce phénomène. Elles représentent la réponse impulsionnelle h(t) d'un canal en fonction du temps. Sur la partie A, on suppose qu'une impulsion a été émise à un certain temps et qu'un premier signal $a_1$ a été reçu avec un certain retard $\tau_1$, suivi d'une réplique $a_2$ à l'instant $\tau_1+Tm$, où Tm représente le retard du second trajet par rapport au premier. Sur la partie B, on suppose qu'un second signal a été émis après un intervalle Ts égal à la durée d'un symbole et l'on a supposé en outre que cet intervalle était égal au retard Tm. On suppose en outre que les propriétés du canal ne se sont pas modifiées dans l'intervalle Ts, c'est-à-dire que le retard $\tau_2$ est égal à $\tau_1$ et $T_m$ est resté constant. On reçoit alors un signal $b_1$ à l'instant $T_2$ suivi d'une réplique $b_2$ à l'instant $\tau_2+Tm$.

Comme Ts=Tm par hypothèse, il est clair que les signaux $a_2$ et $b_1$ vont interférer et dégrader la réception. Pour éviter cette source de dégradation, il faut faire en sorte que $b_1$ apparaisse au-delà de $a_2$, c'est-à-dire que la durée Ts des symboles soit supérieure à l'étalement Tm de la réponse impulsionnelle. En d'autres termes, il faut que le débit en symboles soit inférieur à 1/Tm. Plus la réponse impulsionnelle est étalée, plus la contrainte sur le débit est grande.

Le but de l'invention est justement de remédier à cet inconvénient. En réduisant le phénomène d'interférences entre symboles, l'invention autorise des débits plus importants dans des environnements où l'étalement de la réponse impulsionnelle du canal est bien plus grande que la durée du symbole (jusqu'à 16 fois dans un exemple décrit plus loin).

Le document EP-A-0 693 834 décrit un système de radiocommunications mobiles de type CDMA dans lequel la liaison station de base/station mobile utilise l'une ou l'autre de plusieurs séquences d'étalement, la séquence utilisée à l'émission étant identifiée pour que la station mobile puisse désétaler le signal reçu. On peut transmettre le signal sur trois voies parallèles utilisant 3 codes différents, pour augmenter le débit d'information.

**Exposé de l'invention**

Pour réduire les risques d'interférences entre symboles, l'invention préconise de traiter les symboles successifs avec des séquences pseudo-aléatoires différentes ce qui permet, à la réception, de mieux discriminer les signaux reçus. Selon l'invention, le nombre de séquences successives différentes est limité à un nombre S fixé. Au-delà de S séquences, on réutilise les séquences déjà utilisées. Autrement dit, on traite des paquets de S symboles par des jeux répétitifs de S séquences. Il en résulte que l'intervalle de temps au bout duquel on retrouve la même séquence pseudo-aléatoire n'est plus Ts mais S fois Ts. La contrainte sur la durée du symbole n'est donc plus Ts>Tm mais STs>Tm. En terme de débit cela signifie qu'à étalement donné le débit autorisé est S fois plus élevé que dans l'art antérieur. Il se trouve limité supérieurement non plus par 1/Tm mais par S/Tm.

Ce procédé, qui consiste à traiter des paquets de S symboles par des jeux répétitifs de S séquences pseudo-aléatoires peut encore être perfectionné en traitant en parallèle plusieurs paquets de S symboles, avec autant de jeux de séquences différentes.

De façon précise, l'invention a donc pour objet un procédé de transmission de données par étalement de spectre dans lequel :

- à l'émission : à partir de données à transmettre on constitue des symboles, on module ces symboles par étalement de spectre à l'aide de séquences pseudo-aléatoires,
- à la réception : on corrèle le signal reçu avec les séquences pseudo-aléatoires utilisées à l'émission, on retrouve les symboles émis et on restitue les données,

ce procédé étant **caractérisé en ce que** :

a) l'émission :

i) on constitue un jeu de S séquences pseudo-aléatoires successives différentes où S est au moins égal à 2,
ii) on groupe les symboles à transmettre en paquets successifs de S symboles chacun,
iii) on module les S symboles successifs d'un paquet par les S séquences pseudo-aléatoires successives du jeu de séquences,
iv) on réitère l'opération iii) pour les paquets successifs de S symboles, les séquences pseudo-aléatoires du jeu étant ainsi utilisées de manière répétitive,

b) à la réception :

on corrèle le signal reçu avec chacune des S séquences pseudo-aléatoires utilisées à l'émission, on restitue les paquets successifs de symboles et on restitue les données correspondantes.
La conversion effectuée à l'émission peut être une sommation.
Dans un mode de mise en oeuvre particulier, on traite en parallèle plusieurs paquets de S symboles.

L'invention a également pour objet un émetteur et un récepteur pour la mise en oeuvre de ce procédé.

**Brève description des dessins**

- la figure 1, déjà décrite, illustre le phénomène d'interférence entre symboles ;
- la figure 2 montre un mode de réalisation d'un émetteur conforme à l'intention
- la figure 3 montre un mode de réalisation d'un récepteur conforme à l'invention.

**Description de modes particuliers de mise en oeuvre**

Les données à transmettre sont d'abord organisées en symboles selon des techniques usuelles. Chaque symbole peut comprendre un ou plusieurs bits. Les symboles sont ensuite organisés par paquets de S. Si l'on veut, en outre, effectuer un traitement en parallèle, on dispose L paquets de S symboles en parallèle, soit au total un ensemble de M=LS symboles. Les symboles suivants sont organisés de la même manière pour constituer un nouvel ensemble de M symboles et ainsi de suite.
Le tableau I illustre cette organisation série-parallèle. Chaque case représente un symbole. Le premier ensemble de symboles est noté $S_{ij}^{1}$ où i désigne la ligne du tableau, c'est-à-dire le rang du paquet (i allant de 1 à L) et j la colonne, c'est-à-dire le rang dans le paquet (j allant de 1 à S). Dans le deuxième ensemble, les LS symboles sont notés $S_{ij}^{2}$ et ainsi de suite.

| i \ j | 1 | 2 | S | 1 | 2 | S | |
|---|---|---|---|---|---|---|---|
| 1 | $S_{11}^1$ | $S_{12}^1$ | $S_{1S}^1$ | $S_{11}^2$ | $S_{12}^2$ | $S_{1S}^2$ | $S_{11}^3$ |
| 2 | $S_{21}^1$ | $S_{22}^1$ | $S_{2S}^1$ | $S_{21}^2$ | $S_{22}^2$ | $S_{LS}^2$ | $S_{21}^3$ |
| | | | $S_{ij}^1$ | | | $S_{ij}^2$ | |
| L | $S_{L1}^1$ | $S_{L2}^1$ | $S_{LS}^1$ | $S_{L1}^2$ | $S_{L2}^2$ | $S_{LS}^2$ | $S_{L1}^3$ |

**Tableau I**

Tous ces symboles sont traités par étalement de spectre à l'aide de LS séquences pseudo-aléatoires différentes, de préférence orthogonales. Ces séquences sont organisées comme représenté dans le tableau II. Elles sont notées $C_{ij}$, i allant de 1 à L et j allant de 1 à S.

| i \ j | 1 | 2 | S |
|---|---|---|---|
| 1 | $C_{11}$ | $C_{12}$ | $C_{1S}$ |
| 2 | $C_{21}$ | $C_{22}$ | $C_{2S}$ |
| | | $C_{ij}$ | |
| L | $C_{L1}$ | $C_{L2}$ | $C_{LS}$ |

**Tableau II**

Un symbole $S_{ij}$ du tableau I est traité par la séquence pseudo-aléatoire correspondante $C_{ij}$ du tableau II. Lorsque les M séquences ont été utilisées pour un ensemble de M symboles, les mêmes séquences sont réutilisées pour l'ensemble suivant de M symboles et ainsi de suite. La périodicité de réutilisation des séquences est donc $ST_s$.

Quelques exemples numériques, donnés à titre explicatif et nullement limitatif, illustreront les avantages que procurent l'invention. On suppose que l'on travaille avec un débit binaire de 2 Mbits/s en modulation QPSK ("Quaternary Phase Shift Keying"). Le nombre de bits par symbole est donc de 2. La durée Ts d'un symbole est de 1 $\mu$s. Avec un procédé selon l'état de la technique antérieure, cela signifierait que l'étalement du canal Tm devrait être limité à 1 $\mu$s. Avec l'invention, on travaille avec L voies en parallèle (avec L=M/S). Le nombre de bits transmis dans une période symbole Ts est alors m=2L. Le tableau III donne quelques exemples de l'étalement maximum $Tm_{max}$ que l'on peut admettre, pour deux valeurs de M (8 et 16) et, pour chacune, 3 valeurs de S (respectivement 4, 8 et 16).

**Tableau III**

| | M=8 | M=16 |
|---|---|---|
| S=4 | m=4 bits/symb $Tm_{max}$=8 $\mu$s | m=8 bits/symb $Tm_{max}$=16 $\mu$s |
| S=8 | m=2 bits/symb $Tm_{max}$=8 $\mu$s | m=4 bits/symb $Tm_{max}$=16 $\mu$s |
| S=16 | | m=2 bits / symb $Tm_{max}$=16 $\mu$s |

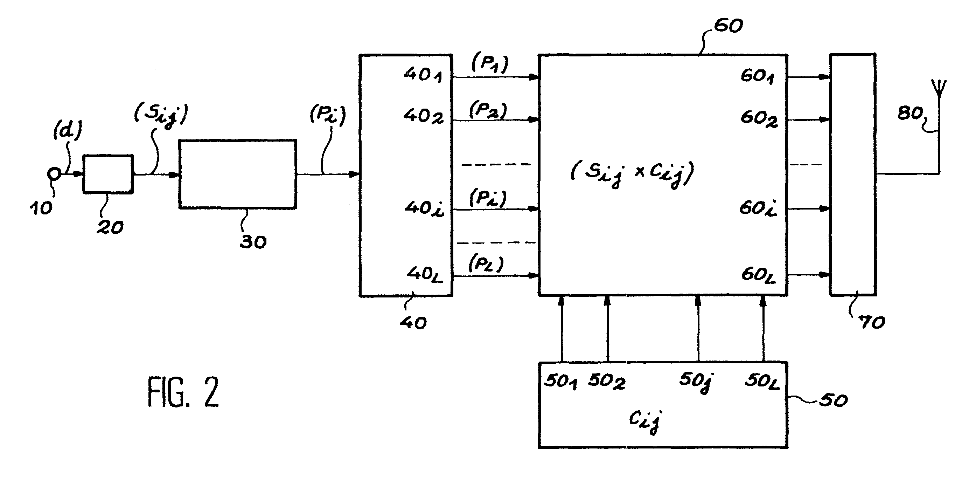

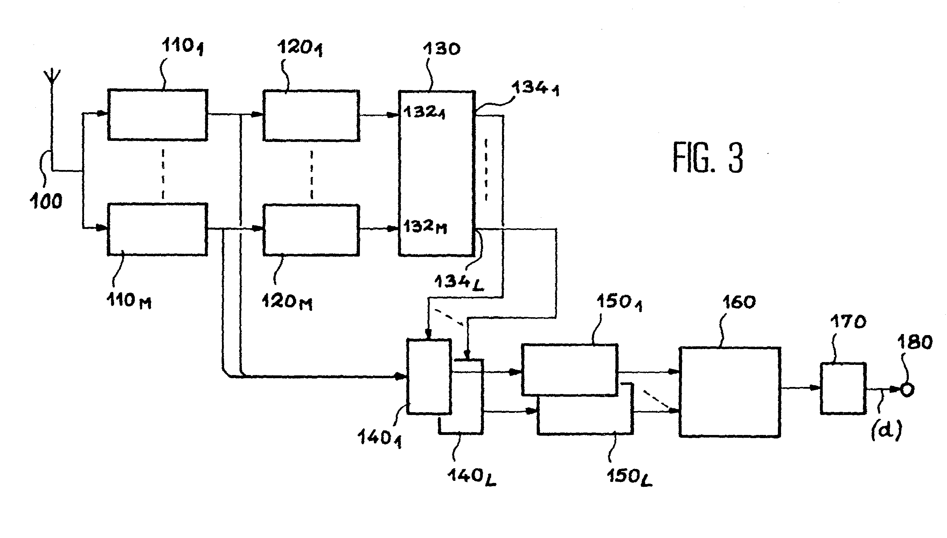

Les figures 2 et 3 illustrent des exemples de réalisation d'un émetteur et d'un récepteur conformes à l'invention. Sur la figure 2, l'émetteur comprend une entrée générale 10 recevant les données à transmettre d, un circuit 20 transformant ces données en symboles (il peut s'agir d'un modulateur à décalage de phase PSK), un moyen 30 apte à former des paquets de S symboles chacun, soit $P_i$ (i allant de 1 à L). Dans la variante illustrée, l'émetteur comprend un convertisseur série-parallèle 40 à L sorties $40_1$, $40_2$, ..., $40_i$ ..., $40_L$ délivrant les L paquets $P_i$, une table 50 de séquences pseudo-aléatoires $C_{ij}$, avec L sorties $50_1$, $50_2$, ..., $50_j$, ..., $50_L$ délivrant L jeux de séquences, un circuit 60 d'étalement des symboles $S_{ij}$ par les séquences $C_{ij}$, ce circuit possédant L sorties $60_1$, $60_2$, ..., $60_i$, ..., $60_L$ délivrant les symboles à spectre étalé, un sommateur 70 et enfin des moyens d'émission symbolisés par une antenne 80.

Le récepteur représenté sur la figure 3 comprend des moyens de réception symbolisés par l'antenne 100, une batterie de M filtres adaptés $110_1$, ..., $110_M$, chacun de ces filtres étant adapté à l'une des séquences pseudo-aléatoires $C_{ij}$ utilisées à l'émission, une batterie de M circuits $120_1$, ..., $120_M$ d'estimation de l'énergie (ou de l'amplitude) des signaux délivrés par les filtres adaptés qui précèdent, un circuit 130 à M entrées $132_l$, ..., $132_m$ et à L sorties $134_l$, ..., $134_L$, déterminant lesquelles des M voies d'entrée contiennent un maximum d'énergie et délivrant sur une ou plusieurs des L sorties un signal de sélection, L circuits $140_1$, ..., $140_L$ à M entrées reliées aux sorties des M filtres adaptés et sélectionnant une entrée parmi M en fonction du signal de sélection reçu, L démodulateurs $150_1$, ..., $150_L$, par exemple de type PSK, un circuit 160 de mise en série des L paquets de symboles délivrés par les démodulateurs, un circuit 170 restituant les données d sur une sortie générale 180.

Le traitement en parallèle n'est qu'une option, l'essentiel, selon l'invention, étant de mettre en oeuvre un jeu de plusieurs séquences successives différentes.

Dans un mode de mise en oeuvre, un émetteur pour la mise en oeuvre du procédé de transmission de données par étalement de spectre décrit au-dessus comprend une entrée générale, des moyens pour recevoir des données à transmettre et pour constituer des symboles, des moyens pour moduler ces symboles par étalement de spectre à l'aide de séquences pseudo-aléatoires, des moyens pour constituer un ensemble de S séquences pseudo-aléatoires successives différentes, des moyens pour grouper les symboles à transmettre en paquets successifs de S symboles chacun, et des moyens pour moduler les symboles successifs d'un paquet par les S séquences pseudo-aléatoires successives du jeu de séquences, et pour réitérer cette modulation pour les paquets successifs de symboles, les séquences pseudo-aléatoires du jeu étant ainsi utilisées de manière répétitive.

Dans un mode de mise en oeuvre, les moyens traitent les paquets de symboles successifs en série et en parallèle.

Dans un mode de mise en oeuvre, un récepteur pour la mise en oeuvre du procédé de transmission de données par étalement de spectre décrit au-dessus comprend des moyens pour corréler un signal de réception avec des séquences pseudo-aléatoires et pour délivrer des symboles, des moyens pour restituer les données à partir de ces symboles, des moyens pour corréler le signal reçu avec S séquences pseudo-aléatoires, des moyens pour restituer des paquets de S symboles, et des moyens pour restituer les données correspondantes sur une sortie générale.

Dans un mode de mise en oeuvre, les moyens traitent les paquets de symboles successifs en série et en parallèle.

## Revendications

1. Un procédé de transmission de symboles de données par étalement de spectre comportant :

   la génération d'une pluralité de séquences pseudo-aléatoires successives, où chaque séquence de la pluralité de séquences pseudo-aléatoires successives est différente de toute autre séquence de la pluralité de séquences pseudo-aléatoires successives ;
   la modulation de symboles de données successifs en utilisant des séquences respectives parmi la pluralité de séquences pseudo-aléatoires successives sans répétition de l'utilisation d'une séquence pseudo-aléatoire jusqu'à ce que toutes les séquences de la pluralité de séquences pseudo-aléatoires aient été utilisées ; et
   la réutilisation des séquences pseudo-aléatoires pour moduler des symboles de données si toutes les séquences de la pluralité de séquences pseudo-aléatoires ont été utilisées.

2. Le procédé selon la revendication 1, dans lequel ladite réutilisation comprend la réutilisation de la pluralité de séquences pseudo-aléatoires successives dans un même ordre que celui dans lequel elles ont été utilisées auparavant.

3. Le procédé selon la revendication 1, dans lequel ladite réutilisation est répétée aussi longtemps qu'il y a des symboles de données à moduler.

4. Un dispositif pour la transmission de symboles de données par étalement de spectre, comportant :

un moyen pour générer une pluralité de séquences pseudo-aléatoires successives, où chaque séquence de la pluralité de séquences pseudo-aléatoires successives est différente de toute autre séquence de la pluralité de séquences pseudo-aléatoires successives,

un moyen pour moduler des symboles de données successifs en utilisant des séquences respectives parmi la pluralité de séquences pseudo-aléatoires successives sans répétition de l'utilisation de séquences pseudo-aléatoires jusqu'à ce que toutes les séquences de la pluralité de séquences pseudo-aléatoires successives aient été utilisées, et où le moyen pour moduler en plus réutilise les séquences pseudo-aléatoires pour moduler des symboles de données si toutes les séquences de la pluralité de séquences pseudo-aléatoires successives ont été utilisées.

5. Le dispositif selon la revendication 4, dans lequel ledit moyen pour moduler réutilise les séquences pseudo-aléatoires dans le même ordre que celui dans lequel elles ont été utilisées auparavant.

6. Le dispositif selon la revendication 4, dans lequel ledit moyen pour moduler réutilise les séquences pseudo-aléatoires aussi longtemps qu'il y a des symboles de données à moduler.

7. Le dispositif selon la revendication 4, dans lequel le moyen pour générer comprend un générateur de séquences pseudo-aléatoires configuré pour générer la pluralité de séquences pseudo-aléatoires successives.

8. Le dispositif selon la revendication 4, dans lequel le moyen pour moduler comprend un étaleur configuré pour moduler des symboles de données successifs en utilisant des séquences respectives de la pluralité de séquences pseudo-aléatoires successives.

FIG. 1

FIG. 2

FIG. 3

Europäisches
Patentamt
European
Patent Office
Office européen
des brevets

**RAPPORT DE RECHERCHE EUROPEENNE**

Numéro de la demande

EP 09 17 8930

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 0 693 834 A (NIPPON TELEGRAPH & TELEPHONE) 24 janvier 1996 (1996-01-24) * colonne 13, ligne 5 - colonne 14, ligne 56; revendication 9; figures 6,8 * ----- | 1-8 | INV. H04B1/707 H04J13/00 |
| A | WADA T ET AL: "A CONSTANT AMPLITUDE CODING FOR ORTHOGONAL MULTI-CODE CDMA SYSTEMS" IEICE TRANSACTIONS ON FUNDAMENTALS OF ELECTRONICS, COMMUNICATIONS AND COMPUTER SCIENCES,JP,INSTITUTE OF ELECTRONICS INFORMATION AND COMM. ENG. TOKYO, vol. E80-A, no. 12, 1 décembre 1997 (1997-12-01), pages 2477-2483, XP000768674 ISSN: 0916-8508 * page 2477, colonne de droite, ligne 32 - page 2478, colonne de droite, ligne 6; figure 1 * ----- | 1-8 | |
| A | EP 0 708 534 A (CANON KK) 24 avril 1996 (1996-04-24) * colonne 1, ligne 48 - colonne 2, ligne 25; figures 24,25 * ----- | 1-8 | DOMAINES TECHNIQUES RECHERCHES (IPC) H04B H04J |

Le présent rapport a été établi pour toutes les revendications

| Lieu de la recherche | Date d'achèvement de la recherche | Examinateur |
|---|---|---|
| La Haye | 28 janvier 2010 | Nilsson, Martin |

EPO FORM 1503 03.82 (P04C02)

**ANNEXE AU RAPPORT DE RECHERCHE EUROPEENNE**
**RELATIF A LA DEMANDE DE BREVET EUROPEEN NO.**

EP 09 17 8930

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

28-01-2010

| Document brevet cité au rapport de recherche | | Date de publication | Membre(s) de la famille de brevet(s) | | Date de publication |
|---|---|---|---|---|---|
| EP 0693834 | A | 24-01-1996 | CN | 1303190 A | 11-07-2001 |
| | | | CN | 1303191 A | 11-07-2001 |
| | | | CN | 1124552 A | 12-06-1996 |
| | | | DE | 69532903 D1 | 27-05-2004 |
| | | | DE | 69532903 T2 | 17-03-2005 |
| | | | WO | 9522213 A1 | 17-08-1995 |
| | | | US | 5673260 A | 30-09-1997 |
| EP 0708534 | A | 24-04-1996 | DE | 69533887 D1 | 03-02-2005 |
| | | | DE | 69533887 T2 | 15-12-2005 |
| | | | JP | 3581448 B2 | 27-10-2004 |
| | | | JP | 8172417 A | 02-07-1996 |
| | | | US | 5856997 A | 05-01-1999 |

EPO FORM P0460

Pour tout renseignement concernant cette annexe : voir Journal Officiel de l'Office européen des brevets, No.12/82

**EP 2 161 847 A1**

**RÉFÉRENCES CITÉES DANS LA DESCRIPTION**

**Documents brevets cités dans la description**

- EP 0693834 A